# EUROPEAN PATENT APPLICATION

(11) **EP 4 108 447 A1**
(43) Date of publication of application: **28.12.2022**
(21) Application number: 22178827.6
(22) Date of filing: 14.06.2022
(51) Int. Cl.: B32B 5/22, E04B 1/84, G10K 11/168

(54) **SOUND-ABSORBING PANEL**

(30) Priority: 24.06.2021 IT 202100016604
(71) Applicant: TONUCCI S.N.C. DI TONUCCI ANDREA, GIACOMO & C., 61122 Pesaro (PS) (IT)
(72) Inventor: TONUCCI, GIACOMO, 61121 PESARO (IT)
(74) Representative: Baldi, Claudio

(57) **Abstract**

A sound-absorbing panel (100) comprising a first sound-absorbing body (1a) made of melamine and a second sound-absorbing body (1b) made of melamine that are coupled together; said sound-absorbing panel (100) also comprises a stiffening element (3) disposed inside a seat (4) of the second body, and a protective layer (2) of self-extinguishing paint applied on outer sides (10a, 10b) and/or on lateral sides (13a, 13b) of the first body and of the second body (1a, 1b).

## Description

The present patent application for industrial invention relates to a sound-absorbing panel.

As it is known, sound-absorbing panels are used to acoustically insulate or soundproof a room, that is to say to eliminate sound waves and/or control the reflections and/or control the reverberation time and/or control a room acoustically.

Notoriously, sound-absorbing panels are made of a material that is capable of absorbing the sound energy. The capability of absorbing sound waves is expressed by means of a sound absorption coefficient. The sound absorption coefficient of a sound-absorbing panel is the degree to which the sound energy incident on a panel is absorbed.

Materials having a high sound absorption coefficient of sound waves are known. However, such materials are impaired by the fact that they are easily subject to deformation.

Materials with a higher resistance to breakage and/or deformation are also known on the market, but they have a lower sound absorption coefficient.

In order to overcome these problems, engineers, inventors and researchers have worked to find new solutions that make it possible to obtain a sound-absorbing panel that is strong and sturdy and has a high sound absorption coefficient.

The same applicant has devised a solution described in the patent application EP3416160 by which it aimed to provide an extremely efficient and robust sound-absorbing panel.

Specifically, the sound-absorbing panel described in the patent application EP3416160 comprises a melamine sound-absorbing body having two sides, a front side and a back side, and a perimeter edge.

A layer of paint composed of water-dispersed synthetic resins with cork elastic and thermal inert material is applied to the front side and to the perimeter edge, whereas a polypropylene alveolar panel is applied to the back side.

The paint has both aesthetic and protective functions for the body. As defined by EP3416160, self-extinguishing pyrogen-free charges are applied to the paint to prevent flame propagation.

On the other hand, the polypropylene alveolar panel provides rigidity to the sound-absorbing panel.

Although EP3416160 seemed to be able to solve the problems of the prior art properly, with the passing of time various drawbacks were however encountered.

The first issue relates to the fact that polypropylene alveolar panel drastically reduces the sound-absorbing capacity of the panel on the side where it is applied. Therefore, the sound-absorbing panel is only usable when attached to a wall or to a ceiling and therefore it is not usable as a partition to separate and soundproof two areas of a room.

In addition, the application of the polypropylene panel has proven to be inefficient in another respect, which is particularly evident when the panel has high dimensions. In fact, in case of a large size, the sound-absorbing panel tends to bend.

A further drawback that has been encountered is that concerning the fire-retardant properties of the sound-absorbing panel. Theoretically, the application of the aforementioned paint to the sound-absorbing panel was supposed to limit the propagation of flames. However, after carrying out tests and trials, the applicant noted that the fire response of the sound-absorbing panel of EP3416160 is very weak, that is to say it ignites easily.

KR20140089323A describes a sound-absorbing panel comprising a central body made of melamine foam and a reinforced mesh covering at least the front and the back of said central panel of melamine foam. The sound-absorbing panel also includes paints and fillers applied to the outside of the panel. So in KR20140089323A the reinforced mesh is disposed outside the melamine body and not inside the melamine body. The construction process of such a panel is extremely time-consuming and complex because it requires to fix the reinforced mesh to the melamine body, apply the filler and the paint, and finally sand the outside of the panel with sandpaper or the like.

CN1569458A describes a soundproofing panel comprising an outer body made of cardboard or expanded polystyrene and a stiffening panel arranged inside the outer body. The panel of CN1569458A is not efficient.

CN202017277U describes a multilayer wall for buildings. The multilayer wall comprises the following components, going from the inside to the outside: a fireproof layer made of autoclaved cellulose fiber concrete, a lightweight steel frame, an insulation layer, an anti-moisture layer made of fiber concrete, an anti-mold layer made of breathable paper, a climate control layer, an additional insulation layer, and an outer decorative layer.

The outer decorative layer comprises a boxed body made of fiber-reinforced concrete with a central seat and a perimeter edge that defines an access to the central seat. Inside the central seat of the boxed body a multilayer is arranged, comprising an aluminum plate sandwiched between two layers of phenolic insulation plates. One of the two phenolic plates has a visible side that is flush with the perimeter edge of the boxed body.

Being composed of several layers, the multilayer wall described in CN202017277U can only be used as a wall of a building and not as a sound-absorbing panel to be arranged in a room of a building.

The purpose of the present invention is to devise a new sound-absorbing panel that is minimally subject to bending and deformation and is capable of soundproofing or absorbing the acoustic waves from both sides of the sound-absorbing panel.

A further purpose is to provide a sound-absorbing panel that is reliable and inexpensive.

Another purpose is to devise a sound-absorbing panel that is also fireproof.

These purposes are achieved in accordance with the invention with the features listed in the appended independent claim 1.

Advantageous achievements appear from the dependent claims.

The sound-absorbing panel according to the invention is defined by claim 1.

For the sake of explanatory clarity, the description of the sound-absorbing panel according to the invention continues with reference to the appended drawings, which are for illustrative and non-limiting purposes only, wherein:
Fig. 1 is an axonometric view of the sound-absorbing panel according to the invention;
Fig. 2 is a sectional view of the sound-absorbing panel of Fig. 1 according to plane II-II;
Fig. 3 is an exploded view of the sound-absorbing panel of Fig. 1.

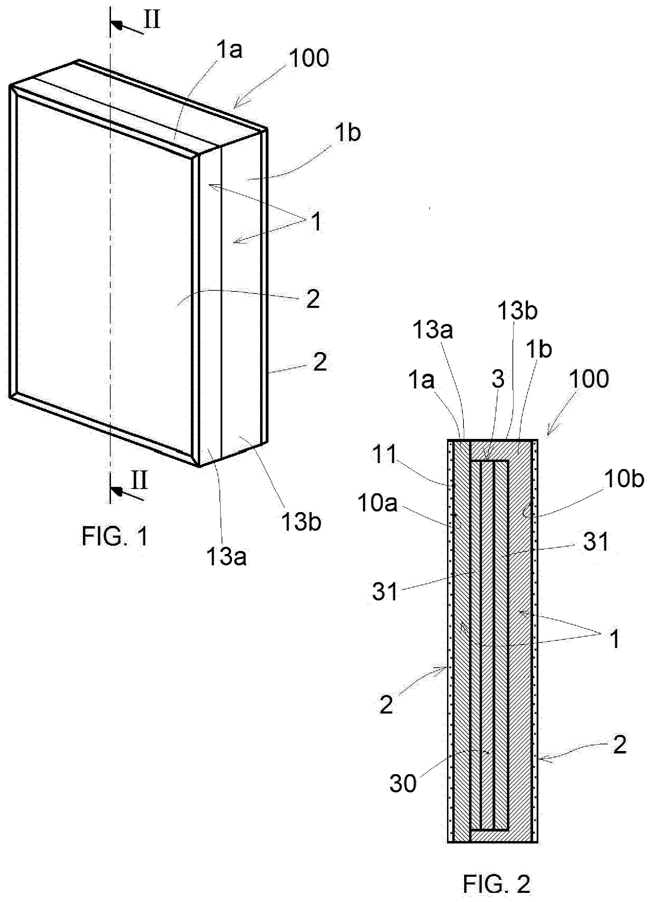

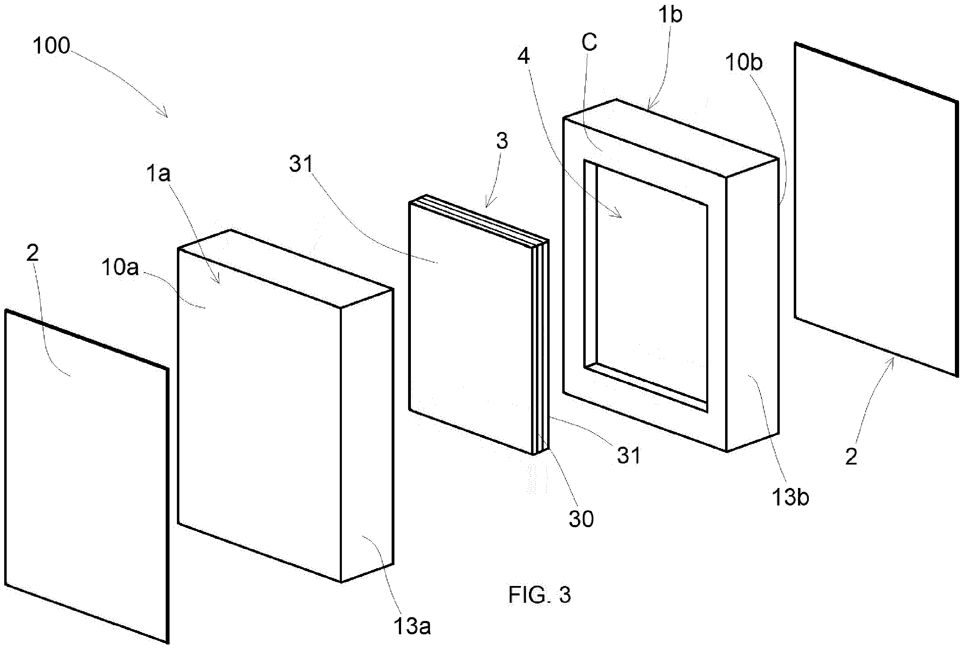

With reference to Figs. 1, 2 and 3, a sound-absorbing panel according to the invention is described, which is generally indicated by the reference number (100).

The sound-absorbing panel (100) comprises:
- a first (1a) sound-absorbing body; and
- a second (1b) sound-absorbing body.

Each body (1a, 1b) includes an inner side facing the other body (1b, 1a), an outer side (10a, 10b) opposite the inner side, and lateral sides (13a, 13b).

The two bodies (1a, 1b) have the same shape when seen from the front.

The inner side of the second body (1b) has a frame (C) delimiting a seat (4).

The sound-absorbing panel (100) also includes a stiffening element (3) housed inside the seat (4) of the second body. The seat (4) has a depth equal to the thickness of the stiffening element (3) so that the element is housed perfectly in the seat (4). The seat (4) is preferably cut out by means of a milling process.

The frame (C) of the second body (1b) is attached to the first body (1a), particularly to the inner side of the first body (1a), in such a way that the two bodies (1a, 1b) define a cover (1) that completely surrounds and covers the stiffening element (3).

An adhesive is preferably used to attach the frame (C) of the second body (1b) to the first body (1a).

Also the first body (1a) may be provided with a seat just like the second body (1b). In such a case, around the two seats of the bodies (1a, 1b) there will be frames suitable for being disposed in mutual contact.

The cover (1) defined by the two bodies (1a, 1b) may comprise a first side coinciding with the outer side (10a) of the first body (1a), a second side coinciding with the outer side (10b) of the second body (1b) and a perimeter defined by the lateral sides (13a, 13b) of the two bodies (1a, 1b) coupled together.

The cover (1) has an overall thickness preferably comprised between 55 mm and 65 mm. Otherwise said, between the outer sides (10a and 10b) of the two bodies (1a, 1b) there is a gap comprised between 55 mm and 65 mm.

The first (1a) and second (1b) sound-absorbing bodies, which define the cover (1), are made of expanded melamine.

Specifically, a melamine foam, which is an open-cell, heat and flame-resistant melamine-based foam, is used. Due to the open-cell structure, the melamine foam has a high absorption coefficient of sound waves.

The melamine foam has a density of 9.5 ± 1.5 kg/m3. Following experimental tests, the melamine foam was found to have:
- a tensile strength greater than 120 kPa;
- an elongation strength before rupture of 10%;
- a compressive strength comprised between 5 kPa and 20 kPa when the melamine foam is compressed to 10% of its initial thickness;
- a permanent deformation comprised between 5% and 30%, following a deformation equal to 50% of the initial thickness at a temperature of 70°C, for 22 hours;
- a permanent deformation comprised between 10% and 35%, following a deformation equal to 50% of the initial thickness at a temperature of 20°C, for 72 hours;
- a thermal conductivity of less than 0.035 W/m*K, at 10°C;
- a use-limiting temperature of about 150°C.

The stiffening element (3), which is arranged in the seat (4) of the second body, acts as supporting structure of the sound-absorbing panel (100).

In the preferred embodiment of the invention, the stiffening element (3) has a thickness comprised between 4 mm and 6 mm, preferably 5 mm.

Preferably, the stiffening element (3) is multilayer and comprises two outer layers (31) of aluminum and one central layer (30) of self-extinguishing polyurethane interposed between the two outer layers (31) of aluminum.

Advantageously, the stiffening element (3) is disposed in the seat (4) at a distance of about 45 mm with respect to one of the two outer sides (10a) of one of the two bodies and of 10 mm with respect to the outer side (10b) of the other body. Instead, with respect to the lateral sides (13b) said stiffening element (3) has a distance comprised between 10 mm and 20 mm.

The sound-absorbing panel (100) further comprises a protective layer (2) applied to said outer side (10a) of the first body (1a) and/or to said outer side (10b) of the second body (1b) and/or to the lateral sides (13a, 13b) of the first and second bodies. The protective layer (2) is suitable for protecting the bodies (1a, 1b), i.e. the cover (1) externally.

Specifically, as shown in the appended figures, the protective layer (2) is applied to the outer sides (10a, 10b) of the first body and of the second body.

Although not shown in the appended figures, the protective layer (2) could also be applied on the lateral sides (13a, 13b) of both bodies (1a, 1b) to protect the bodies (1a, 1b) laterally.

The protective layer (2) is a fire retardant layer and comprises a self-extinguishing paint comprising water-dispersed synthetic resins, self-extinguishing charges, titanium dioxide, pigments, water, inert charges and preservatives.

The composition of the self-extinguishing paint has been specifically obtained by the applicant in order to compromise on three characteristics that are necessary for the protective layer (2).

The protective layer (2) must have the following characteristics:
- self-extinguishing, defined as the capability of the protective layer (2) not to propagate flames;
- breathability, defined as the capability of the protective layer (2) to let sound waves pass through, in such a way not to reduce the sound-absorbing capacity of the sound-absorbing panel;
- elasticity, defined as the capability of the protective layer (2) to deform under the action of stress and resume its original shape at the end of said stresses.

In order to verify and evaluate the characteristics of the protective layer (2) obtained by means of the aforementioned paint, various tests were carried out, which confirmed that the protective layer (2) has excellent values of self-extinguishing, breathability and elasticity. In particular, with regard to self-extinguishing, this protective layer was certified in fire reaction Italian Class 1.

With regard to breathability, the protective layer (2) obtained with the aforementioned paint is remarkably breathable and therefore it does not affect the soundproofing characteristic of the sound-absorbing panel. Otherwise said, said paint makes it possible to obtain a protective layer (2) having an open-cell structure that does not strongly affect the sound absorption coefficient of the sound-absorbing panel.

Precisely in this regard, sound-absorption tests of the sound-absorbing panel (100) with protective layer (2) and without protective layer (2) were carried out so as to verify the impact of the protective layer in terms of sound absorption coefficient (a).

| Hz | a (Panel without protective layer) | a (Panel with protective layer) |
|---|---|---|
| 100 | 0.1 | 0.1 |
| 125 | 0.2 | 0.2 |
| 160 | 0.3 | 0.3 |
| 200 | 0.3 | 0.4 |
| 250 | 0.6 | 0.7 |
| 315 | 0.9 | 1 |
| 400 | 1.2 | 1.1 |
| 500 | 1.4 | 1.3 |
| 630 | 1.5 | 1.4 |
| 800 | 1.4 | 1.5 |
| 1000 | 1.5 | 1.5 |
| 1250 | 1.4 | 1.4 |
| 1600 | 1.3 | 1.4 |
| 2000 | 1.3 | 1.3 |
| 2500 | 1.2 | 1.2 |
| 4000 | 1.2 | 1.1 |
| 5000 | 1.2 | 1.1 |

The table shows that the impact in terms of sound absorption of the protective layer (2) on the sound-absorbing panel (100) is essentially negligible.

Preferably, the layer, i.e. the fire retardant paint, can also include quartz powder having an aesthetic and finishing function only.

Optionally, the outer sides (10a, 10b) of each body (1a, 1b) are milled in such a way to have depressions so as to increase the surface of the sides (10a, 10b).

When increasing the surface of the sides (10a, 10b), the area of impact with sound waves increases. Consequently, the absorption of the sound waves increases.

In addition, due to the arrangement of the depressions and to the consequent increase in the surface of the sides (10a, 10b), it is possible not only to increase the sound absorption of the sound-absorbing panel (100) but also to aesthetically characterize the sound-absorbing panel by making bas-relief designs on the outer sides (10a, 10b) of the two bodies (1a, 1b) that make the panel distinctive and aesthetically pleasing as well.

Advantageously, the lateral sides (13a, 13b) of the two bodies (1a, 1b) can also be milled, so as to increase the absorption of the sound waves and improve the aesthetics of the sound-absorbing panel (100).

Although not shown in the appended figures, said sound-absorbing panel (100) may optionally comprise fixing means for fixing the sound-absorbing panel (100) to a wall or a ceiling.

By way of example, said fixing means may consist in eyelet screws for fixing the sound-absorbing panel (100) with steel cables to a ceiling. Specifically, each eyelet screw comprises:
- a threaded stem passing through one of the bodies (1a, 1b) and engaged on the stiffening element (3), and
- an eyelet to which a cable attached to the ceiling is hooked.

Alternatively said fixing means may comprise screws with spacers that allow the sound-absorbing panel (100) to be attached to the wall.

Additionally, said fixing means may consist in circular magnets with a central hole, placed on the outer side of one of the two bodies (1a, 1b) of the cover (1) suitable for being not visible and fixed by means of self-tapping screws to the stiffening panel (3). Said circular magnets are suitable for being magnetically coupled to metal spacers fixed to the wall at preset distances that are defined from time to time according to the type of application.

A method for making the sound-absorbing panel (100) according to the invention is described below.
Firstly, the method provides for arranging the first and second (1a, 1b) sound-absorbing bodies made of melamine and the stiffening element (3).

Then, the inner side of one of the two bodies (1a, 1b) or the inner sides of the two bodies (1a, 1b) are milled in such a way as to make a seat (4) or two opposite seats suitable for housing the stiffening element (3).

Then an adhesive or the like is applied to the stiffening element and the inner surface of each body (1a, 1b) (both on the seat (4) and on the frame (C)).

Successively, the stiffening element (3) is placed inside the seat (4) and is fixed/attached to the seat by means of the adhesive. Then, the two bodies (1a, 1b) are coupled together with the frame (C) in contact with the inner side of the other body. The adhesive, which has been applied previously, allows the connection between the bodies (1a, 1b) that thus define the sound-absorbing cover (1) with the stiffening element (3) inside it. The stiffening element (3) is thus embedded inside the cover (1) and is therefore not visible from the outside, thus making the sound-absorbing panel aesthetically pleasing.

Optionally, the outer side (10a, 10b) of one or both bodies (1a, 1b) and also the lateral sides (13a ,13b) of one or both bodies (1a, 1b) can be milled so as to increase the surface of the sides (10a, 10b; 13a ,13b) of the bodies (1a, 1b), thus increasing the sound absorption efficiency of the sound-absorbing panel (100).

Finally, the method for making the sound-absorbing panel (100) provides for applying the protective layer (2) on the outer side (10a, 10b) of the first body and of the second body and/or also on the lateral sides (13a, 13b) of the first body and of the second body.

The protective layer (2) is applied with a spray gun, an airless system, a roller or a brush. Preferably, such application should be repeated at least twice. Specifically, a coating layer is made by applying the paint to the sound-absorbing panel (100) by means of a series of crisscrossing and overlapping layers. Preferably, the layers have an angle of 45°. Successively, a finishing coat is made by applying paint to the sound-absorbing panel (100) in the same way as the coating layer. Between the coating layer and the finishing coat, it is necessary to wait about 30 minutes.

Optionally, before applying the protective layer (2) on the sides (10a, 10b, 13a, 13b) of the bodies (1a, 1b), quartz powder can be added to the paint to improve the aesthetic appearance of the protective layer (2) when the paint is dry.

It should be noted that the milling step to generate low-relief depressions and the painting step to obtain the protective layer (2) can be optionally done before the two bodies (1a, 1b) are coupled together.

As a result of the above description, the advantages of the present invention become apparent.

First of all, the stiffening element (3) disposed between the two bodies (1a, 1b), acts as a supporting structure for the sound-absorbing panel (100). Moreover, since the stiffening element (3) is completely covered by the bodies (1a, 1b) made of melamine, such stiffening element does not affect the surface finish of the panel, so there is no external sanding of the panel as it is provided in KR20140089323A.

Furthermore, the multilayer composition of the stiffening element (3) prevents the sound-absorbing panel from bending even in the case of large dimensions.

Additionally, since the stiffening element (3) is arranged completely inside the cover (1), the outer sides of the bodies (1a, 1b) are visible and therefore the sound-absorbing panel (100) maintains its sound-absorbing characteristics on both sides of the cover (1), thus making the sound-absorbing panel also suitable to be used as a partition wall to divide a room into two separate sound-absorbing spaces.

The issue of flammability of the panel was solved by the application of the protective layer (2) consisting of a self-extinguishing paint.

Numerous variations and modifications of detail may be made to the present embodiment of the invention, within the reach of an expert of the field, and in any case within the scope of the invention as expressed by the appended claims.

## Claims

1. Sound-absorbing panel (100) comprising:
- a first sound-absorbing body (1a) made of melamine;
- a second sound-absorbing body (1b) made of melamine comprising a frame (C) that defines a seat (4);
- a stiffening element (3) disposed inside the seat (4) of the second body; and
- a protective layer (2) of self-extinguishing paint applied on outer sides (10a, 10b) and/or on lateral sides (13a, 13b) of the first body and of the second body (1a, 1b);
wherein said frame (C) of the second body (1b) is fixed to the first body (1a) in such a way that the first body and the second body (1a, 1b) define a cover (1) that surrounds and covers the stiffening element (3) completely.

2. The sound-absorbing panel (100) according to claim 1, wherein said stiffening element (3) has a multi-layer structure.

3. The sound-absorbing panel (100) according to claim 2, wherein said multi-layer stiffening element (3) comprises three layers, namely two outer layers (31) of aluminum and one central layer (30) of self-extinguishing polyurethane disposed between the two outer layers (31) of aluminum.

4. The sound-absorbing panel (100) according to any one of the preceding claims, wherein said self-extinguishing paint comprises water-dispersed synthetic resins, self-extinguishing charges, titanium dioxide, pigments, water, inert charges and preservatives.

5. The sound-absorbing panel (100) according to any one of the preceding claims, wherein said outer sides (10a, 10b) of the first and second body (1a, 1b) and/or said lateral sides (13a, 13b) of the first and second body (1a, 1b) comprise low-relief depressions.

6. The sound-absorbing panel (100) according to any one of the preceding claims, comprising fixing means for fixing the sound-absorbing panel (100) to a wall or a ceiling.

7. The sound-absorbing panel (100) according to any one of the preceding claims, wherein said first body (1a) and said second body (1b) are made of open-cell expanded melamine.

8. The sound-absorbing panel (100) according to any one of the preceding claims, wherein said stiffening element (3) has a thickness comprised between 4 mm and 6 mm.

9. The sound-absorbing panel (100) according to any one of the preceding claims, wherein said cover (1) has a total thickness comprised between 55 mm and 65 mm.

10. Manufacturing process of a sound-absorbing panel; said method comprising the following operating steps:
- providing a first and a second sound-absorbing body (1a, 1b) made of melamine;
- making a seat (4) defined by a frame (C) on the second body (1b);
- disposing a stiffening element (3) in the seat (4) of the second body (1b);
- fixing the frame (C) of the second body (1b) to the first body (1a) in such a way that the first body and the second body (1a, 1b) define a cover (1) that surrounds and covers the stiffening element (3) completely;
- applying a protective layer (2) of self-extinguishing paint on the outer sides (10a, 10b) and/or on the lateral sides (13a, 13b) of the first and second body (1a, 1 b).

11. The method of claim 10, wherein said step of applying a protective layer (2) of self-extinguishing paint is performed with a spray gun or an airless system or a brush or a roller.

12. The method of claim 10 or 11, comprising a step of milling is to provide low-relief depressions on at least one side chosen from the outer side (10a) of the first body (1a), the outer side (10b) of the second body (1b) and the lateral sides (13a, 13b) of the first body and of the second body.
